Europäisches Patentamt

**European Patent Office** (11) Veröffentlichungsnummer: **0 131 676**

Office européen des brevets **B1**

(12) **EUROPÄISCHE PATENTSCHRIFT**

(45) Veröffentlichungstag der Patentschrift:
02.08.89

(21) Anmeldenummer: 84101622.3

(22) Anmeldetag: 16.02.84

(51) Int. Cl.⁴: **G 06 K 11/00,** B 41 B 19/01, B 41 B 19/00

(54) Verfahren zum automatischen Digitalisieren des Umrisses von Strichgraphiken z.B. Buchstaben.

(30) Priorität: **04.07.83 DE 3324012**

(43) Veröffentlichungstag der Anmeldung:
**23.01.85 Patentblatt 85/4**

(45) Bekanntmachung des Hinweises auf die Patenterteilung:
**02.08.89 Patentblatt 89/31**

(84) Benannte Vertragsstaaten:
**BE DE FR GB NL**

(56) Entgegenhaltungen:
**WO-A-79/01166**
**FR-A-2 160 198**
**FR-A-2 229 098**
**FR-A-2 516 280**

**MICROPROCESSOR SYSTEMS: SOFTWARE, FIRMWARE AND HARDWARE, 6th EUROMICRO SYMPOSIUM ON MICROPROCESSING AND MICROPROGRAMMING, 16.-18. September 1980, London, GB, pages 179-190, North-Holland Publishing Co., Amsterdam, NL; M. TERVONEN et al.: "A microprogrammable character generator for a CRT phototypesetting system"**
**COMPUTER GRAPHICS AND IMAGE PROCESSING, Band 16, Nr. 3, Juli 1981, Seiten 240-269, Academic Press Inc., New York, US; Ph. COUEIGNOUX: "Character generation by computer"**

(73) Patentinhaber: **URW Unternehmensberatung Karow Rubow Weber GmbH, Harksheider Strasse 102, D-2000 Hamburg 65 (DE)**

(72) Erfinder: **Karow, Peter, Dr., Kreienkoppel 55, D-2000 Hamburg 65 (DE)**

(74) Vertreter: **Walenda, Hans, Dipl.Ing. Dr. techn., Berner Weg 28, D-2000 Hamburg 65 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum automatischen Digitalisieren des IKARUS-Formats - vgl. Typographische Monatsblätter TM2 (1980), Heft 2 - von Umrißlinien von Schwarz-Weiß-Bildern und anderen Strichgraphiken wie Buchstaben, Logos, Signets, Piktogrammen, Vignetten, Zierbildern, Schmuckelementen und dergleichen. Als Schwarz-Weiß-Bilder im Sinne der Erfindung sind alle Bilder zu verstehen, deren Elemente ausschließlich aus Teilen zweier verschiedener Helligkeitsstufen oder Farben bestehen.

Ein Bedarf zur Digitalisierung solcher Konturen besteht nicht nur u.a. für die Programmierung von Zeichen-, Gravier-, Fräs-, Schablonenschneide- und Brennschneidemaschinen, sondern seit der Erfindung der elektronischen Setzmaschinen (CRT-Maschinen) auch in großem Umfang für das Digitalisieren der Form von Buchstaben, Ziffern und anderen Satzzeichen.

Für das Digitalisieren solcher Konturen von Schwarz-Weiß-Bildern wie z. B. Buchstaben sind bisher zwei Verfahrensprinzipien bekannt, nämlich das sogenannte Handdigitalisieren mit Hilfe eines Digitizers zur Herstellung des IKARUS-Formats und das sogenannte Scannen mit einem Scanner zur Herstellung von Bitmaps, Lauflängenkodierungen und Vektorformaten.

Dieser Stand der Technik und die ihn weiterführende Erfindung sind nachstehend an Hand der Figuren und Tabellen am Beispiel der Digitalisierungen von Buchstaben beispielsweise, jedoch nicht einschränkend erläutert, da die Erfindung ebenso auch für das automatische Digitalisieren der Umrißlinien aller anderen Schwarz-Weiß-Bilder in gleicher Weise verwendbar ist.

Figur 1 zeigt als Beispiel eines Schwarz-Weiß-Bildes den Buchstaben b.

Figur 2 ist ein nach dem nachstehend erläuterten IKARUS-System für die Digitalisierung markierter Buchstabe der Vorlage Figur 1.

Figur 3 zeigt das Prinzip eines Scanners.

Figur 4 illustriert in Verbindung mit Tabelle 2 am Beispiel des Buchstabens o eine Möglichkeit der Speicherung von Scan-Daten nach dem Lauflängencode.

Figur 5 ist eine durch Scannen erhaltende Abbildung der Figur 1 als Bitmap.

Figur 6 ist die Vektor-Darstellung der Information von Figur 5, die durch von Rechenmaschinen durchgeführte mathematische Umformung dieser Information erhalten wird.

Figur 7 zeigt am Beispiel der Figur 1 die von der angewendeten Gestalterkennung zu erkennenden Gestaltelemente.

Figur 8 ist der aus den Scan-Daten der Figur 5 automatisch erhaltene und in den Koordinatenangaben der Tabelle 3 gespeicherte Umriß der Figur 1, der zum Vergleich neben Figur 2 gestellt ist.

Figur 9 zeigt die Umsetzung der Umrißlinie der Figur 8 in eine für das Drucken besser als die Umrißlinie geeignete Rasterdarstellung.

Die Figuren 10 und 11 zeigen am Beispiel des Buchstabens o eine Möglichkeit der Verbesserung von Scan-Daten gemäß der Erfindung (Gittereinpassung).

Die Figuren 12 und 13 stellen eine für die Durchführung der ersten Verfahrensstufe des erfingungsgemäßen Verfahrens geeignete Vorrichtung dar.

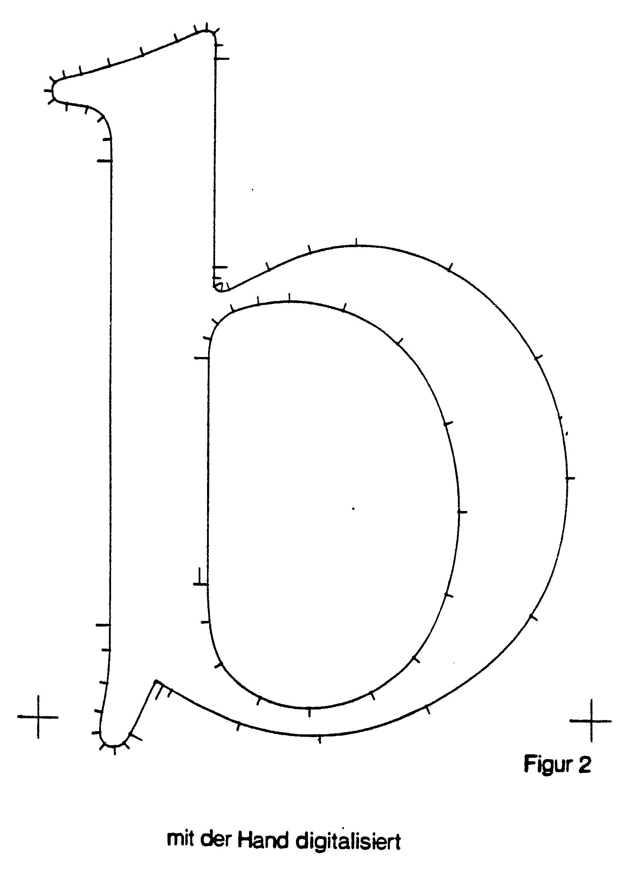

Tabelle 1 zeigt als wesentliches Ergebnis der Handdigitalisierung der Figur 2 die x- und y-Werte der Umrißpunkte dieser Figur in Hundertstel mm und für jeden Punkt die seiner Punktart entsprechende Code-Bezeichnung.

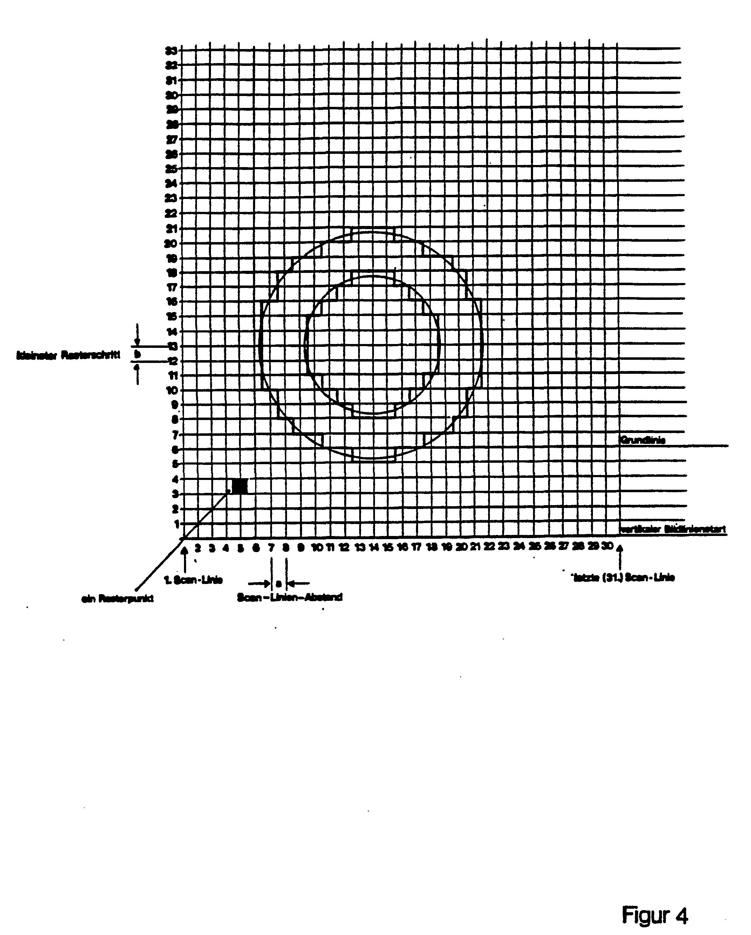

Tabelle 2 gibt die im Lauflängencode gespeicherten Scan-Daten der Figur 4 wieder.

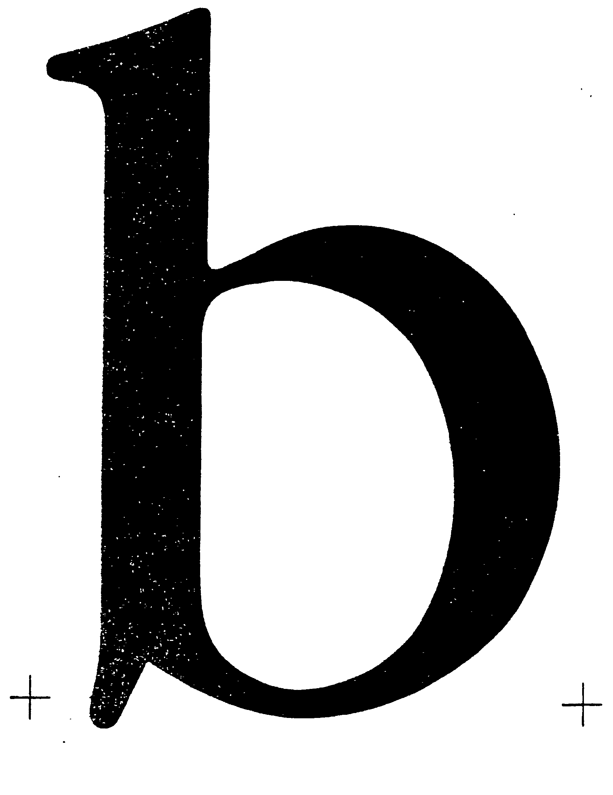

Tabelle 3 enthält die x- und y-Werte, ebenfalls in Hundertstel mm des erfindungsgemäß aus den ursprünglichen Scan-Daten errechneten IKARUS-Formates der Figur 1 mit den zugehörigen Punktart-Codes.

Die Tabellen sind zwar hinsichtlich der sachlich unentbehrlichen Informationen vollständig, aber von allen für die praktische Anwendung nützlichen oder notwendigen, doch für das Verständnis überflüssigen Redundanzen befreit.

Für die Figuren 4, 10 und 11 ist der Deutlichkeit halber ein übertrieben grobes Raster verwendet.

Für das durch die verschiedenen am Markt befindlichen CAD-Systeme (Computer Aided Design) bekannte Handdigitalisieren wird ein sogenannter Digitizer (Koordinatenlesegerät) verwendet, dessen an eine Rechenmaschine angeschlossener Sensor den zu digitalisierenden Linienzug entlang gefahren wird. Jedesmal, wenn das Fadenkreuz des Sensors mit einem zu digitalisierenden Punkt zur Deckung kommt, werden die Koordinaten dieses Punktes, z. B. in Einheiten von je 0,01 mm, durch Betätigung eines Schalters gespeichert, wobei durch die Wahl der jeweils richtigen von mehreren Schalterarten gleichzeitig festgehalten wird, um welche Art von punkt es sich handelt, z. B. Anfangs-, Eck-, Kurven- oder Tangentenpunkt. Wesentlich wichtig sind Eck-, Kurven- und Tangentenpunkte. Im allgemeinen besteht eine Figur aus mehreren geschlossenen Linienzügen. Ihnen entsprechen Sequenzen von Punkten. Anfangspunkte dienen zur Unterscheidung der einzelnen Linienzüge. Genauso gut kann man Endpunkte setzen oder in einer Indexliste die Adressen der einzelnen Anfangs- und Endpunkte der verschiedenen Linienzüge speichern.

Für die Erzeugung des IKARUS-Formats gelten die nachstehenden, programmierbaren Regeln:

- Jede geschlossene Umrißlinie bekommt einen Anfangspunkt. Zunächst wird dafür nach Eckpunkten, dann nach Tangentenpunkten gesucht. Sind keine vorhanden, wird ein Kurvenpunkt genommen.
- Die Lage von spitzen Ecken wird mit Eckpunkten markiert.
- Glatte Übergänge von Kurven zu Geraden werden Tangentenpunkte.
- In Wendebereichen, wo der Drehsinn (Krümmung) sein Vorzeichen ändert, werden ein Kurvenpunkt bzw. bei flachen, langen Wenden zwei Tangentenpunkten gesetzt.
- Eckpunkte und Tangentenpunkte werden untereinander gerade verbunden.
- Kurven werden zunächst auf Stellen untersucht, wo sie in x-Richtung oder in y-Richtung ein Extremum durchlaufen. Dort werden Kurvenpunkte gesetzt.
- Zwischen den Extremen werden nach etwa 30°-Änderung der Tangentenrichtung weitere Kurvenpunkte verteilt.
- Gehen flache in normale oder normale in enge Kurven oder runde Ecken über, werden zwei weitere Kurvenpunkte als Stützpunkte markiert.

Wesentlich billiger als die Handdigitalisierung ist das Scannen, eine automatische Methode, um mit Hilfe sogenannter Scanner Strichgraphiken wie Buchstaben digital zu erfassen.

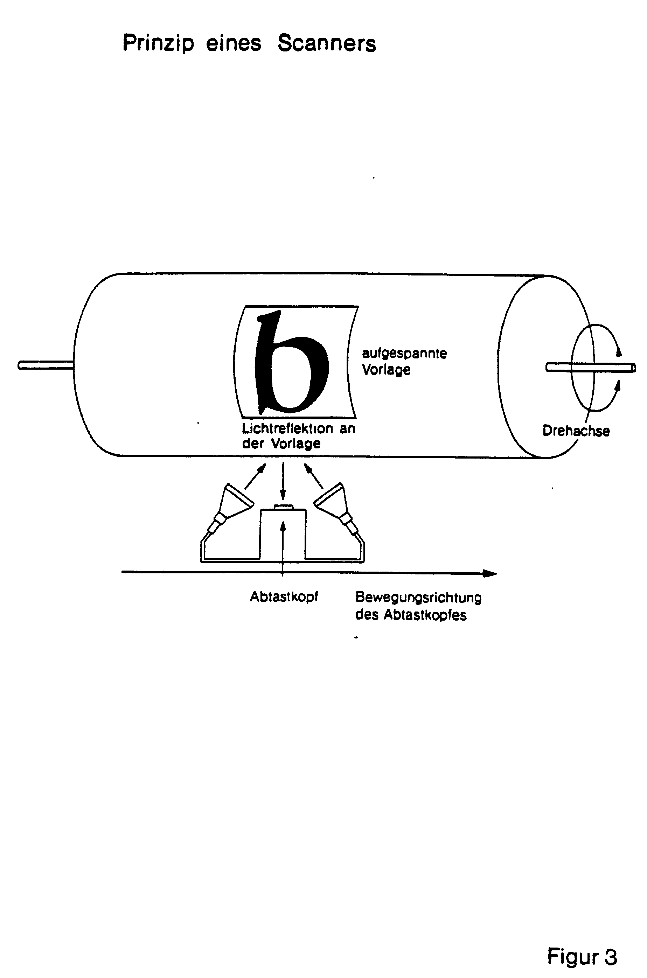

Man benutzt dazu üblicherweise Scanner. Die schwarzweiße Vorlage wird zum Beispiel auf eine Trommel gespannt. Während die Trommel sich dreht, wird die Vorlage abgetastet, wobei sich die Abtastvorrichtung parallel zur Drehachse der Trommel bewegt und die Vorlage in Schraubenlinien punktartig auf starke Lichtreflexion (weiß) oder schwache Lichtreflexion (schwarz) untersucht (siehe Figur 3).

Pro Umdrehung entsteht dabei eine sogenannte Bildlinie, die von der Elektronik des Scanners entweder Punkt für punkt oder unter Einsparung von Speicherkapazität als Lauflängencode gespeichert wird. Dabei wird die Länge einer Bildlinie ($\leq$ Trommelumfang) in Elementarschritte von z. B. 0,1 mm unterteilt. Für jeden Elementarschritt wird festgestellt, ob das reflektierte Licht an dieser Stelle des z. B. 0,1 mm breiten Streifens als "weiß" oder als "schwarz" zu klassifizieren ist. Gezählt wird die Anzahl der Schritte, die hinterher nur weiß oder nur schwarz ergeben haben, und diese Anzahl wird als entweder weiße oder schwarze Lauflänge gespeichert, vgl. Figur 4 und die zugehörige Tabelle 2. Man kann die Vorlage auf dem Scanner immer so einrichten, daß der erste Elementarschritt einer jeden Bildlinie weiß ist und daß eine Bildlinie mit einem sogenannten Bildlinienende abgebrochen kodiert werden kann. So ist z. B. in Tabelle 2 als Bildlinienende der Code 32000 gewählt. In dieser Tabelle ist für die die Mittellinie des Buchstabens o beschreibende achte senkrechte Bildlinie z. B. die Information 5, 8, 18, 21, 32000 gegeben, d.h., daß nach den ersten 5 Feldern (die wie gesagt immer weiß sind) der erste Wechsel (hier zu schwarz) stattfindet, nach dem 8. Feld wieder ein Wechsel zu weiß usw.

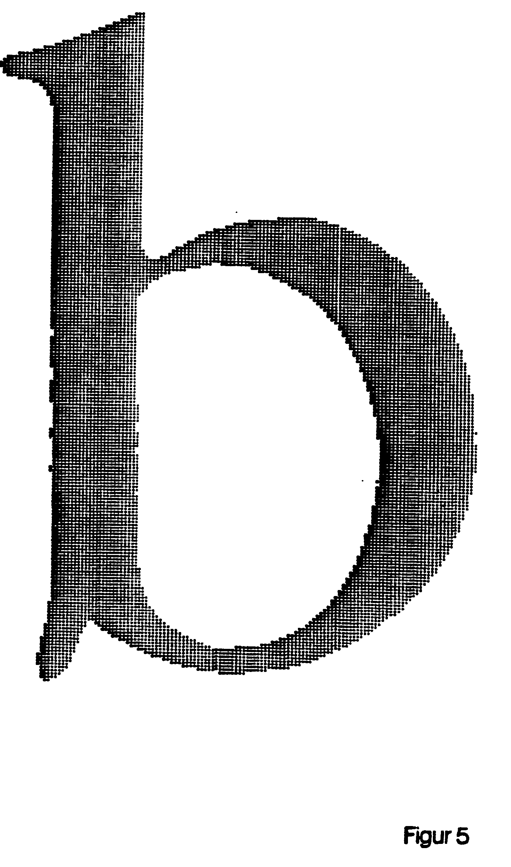

Das Scannen ist wie gesagt wesentlich billiger als das Handdigitalisieren; der Aufwand an menschlicher Arbeitskraft ist minimal. Dieser Vorteil ist aber durch eine erheblich schlechtere Bildqualität erkauft, dadurch bedingt, daß das Scannen insbesondere Konturränder nicht gut erfassen kann. Da die sogenannten Bildpunkte ja keine echten Punkte, sondern kleine Flächenelemente sind, ist es unvermeidlich, daß gerade die die Kontur bestimmenden Flächenelemente weder rein schwarz noch rein weiß sein können, sondern sowohl einen gewissen Weiß- als auch Schwarzanteil aufweisen. Wo immer man die sogenannte "Grauschwelle" legt, d.h. den Schwarzgehalt, oberhalb dessen ein Punkt als schwarz gilt, gibt es stets am Konturenrand Bildpunkte, deren Schwarzgehalt so nahe an dieser Schwelle liegt, daß schon das normale elektronische Rauschen und die unvermeidlichen Helligkeitsschwankungen der Lichtquelle dazu führen, daß benachbarte Konturpunkte in zufälliger und daher unregelmäßiger örtlicher Reihenfolge als schwarz oder als weiß registriert werden. Dadurch erhält die digital gespeicherte Kontur ein unregelmäßig gezacktes Aussehen, vergleiche Figur 5.

Man kann dieser Schwäche des Scanners dadurch begegnen, daß man z. B. mit einer hohen Auflösung von z. B. 0,01 x 0,01 mm scannt. Solche Scanner sind am Markt erhältlich. Sie sind aber einmal sehr teuer und zum anderen erzeugen sie große Datenmengen. Zum Beispiel werden Buchstabenvorlagen in 15 x 15 cm verwendet, dabei entfallen 10 cm auf die Höhe der Großbuchstaben (H-Höhe). Wird diese Vorlage mit einer Auflösung von 0,01 x 0,01 mm gescannt, entstehen für die Bitmap 15000 x 15000 bit = 225 Mbit $\doteq$ 30 MByte Daten, für einen Lauflängencode etwa 60 KB Daten. Beide Mengen sind heute und auch in 5 - 10 Jahren zu groß, um für die Speicherung von nur einem Buchstaben sinnvoll zu sein. Das IKARUS-Format aber leistet die Speicherung von einem Buchstaben mit 10 cm Großbuchstabenhöhe bei einer Genauigkeit von 0,01 mm mit nur 300 Byte im Mittel!

Aus dem Artikel "Character generation by computer" von Ph. Coueignoux, der in der Veröffentlichung Computer Graphics and Image Processing, Band 16, Nr. 3, Juli 1981, Seiten 245 - 269, Academic Press Inc., New York, US, erschienen ist, ist ein Verfahren zum automatischen Digitalisieren des Umrisses von Strichgrafiken, Buchstaben und dergleichen unter Verwendung eines Scanners für die erstmalige Gewinnung und Speicherung der Bildinformation aus der Vorlage bekannt. Gemäß dem bekannten Verfahren wird das gewonnene Bild einem Gestalterkennungsprogramm unterworfen und dabei in Bildelemente, wie Gerade, Kurve, Ecke, zerlegt. Anschließend werden diese Bildelemente einem splinefit unterworfen, wobei zusammengehörige Teilkurven so zu einer Gesamtkurve zusammengesetzt werden, daß an den Berührungspunkten derselben Stetigkeit sowohl des Kurvenverlaufes als auch der Steigung und Krümmung besteht und aus der so erhaltenen mathematischen Darstellung des Umrißverlaufes die Koordinatenpaare von so vielen Punkten berechnet werden, wie zur gewünschten Feinstufigkeit der Digitalisierung erforderlich ist.

Die vorliegende Erfindung ermöglicht nun eine verbesserre vollautomatische Digitalisierung von Buchstaben, Logos, Signets und anderen Strichgraphiken, die kaum mehr menschliche Arbeitskraft erfordert als das normale Scannen und trotzdem Digitalisierungen ergibt, die an Qualität den besten mit Handdigitalisierung erhältlichen mindestens gleichwertig sind.

Die Erfindung, wie in Patentanspruch 1 definiert, besteht im wesentlichen darin, mit Hilfe des bekannten Scanners eine Vorlage, z. B. einen Buchstaben, in Form von weißen und schwarzen Bildpunkten zu erfassen und diese digital gespeicherten Primärinformationen in einem mehrstufigen Verfahren, das nach festen, die Regeln des IKARUS-Systems befolgenden Mikroprogrammen von Rechenwerken durchgeführt werden kann, so aufzuarbeiten, daß eine geschlossene mathematische Darstellung der Umrißlinie erhalten wird und mit Hilfe der letzteren - ebenfalls rein rechnerisch von Rechenwerken - die Koordinatenpaare beliebig vieler Umrißpunkte zu ermitteln. Damit ist eine vollautomatische Digitalisierung vom Scannen bis zur digitalen Speicherung der Umrißlinie in einer der Handdigitalisierung entsprechenden Qualität gegeben.

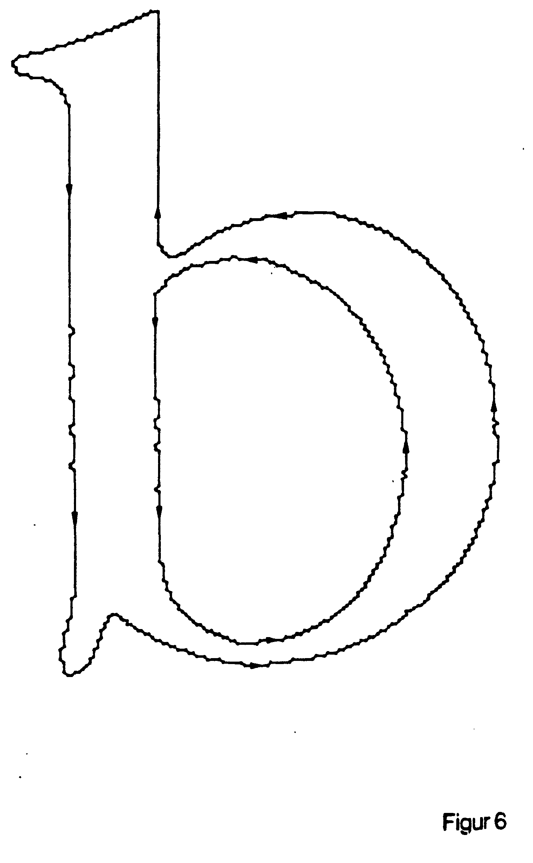

Im einzelnen verläuft das erfindungsgemäße Verfahren so, daß zunächst die Konturen der Vorlage aus den schwarzen Randpunkten der Scanner-Information durch ein Mikroprogramm ermittelt und in Form des sogenannten Vektor-Formates gespeichert werden, wobei die schwarzen Randpunkte in der Art eines Polygonzuges durch gerade Linien miteinander verbunden werden, vergleiche Figur 6.

Durch eine besondere Ausführungsform des erfindungsgemäßen Verfahrens können auch Vorlagen verarbeitet werden, die nur aus den Umrißlinien selbst bestehen. Die Umrißlinien werden im Original mit einer bestimmten Linienstärke von etwa 0,3 bis 0,5 mm gezeichnet (z. B. mit einem runden Scriptol-Schreiber von 0,3 mm Durchmesser).

Die gescannten Daten zeigen dann für die Striche etwa 3 bis 5 Bildpunkte dicke Linien. Ein Skelettierprogramm - vgl. in der Monographie "Automatische Digitalisierung mit Raster-Scannern" von Th. Kreienfels der GMD (Gesellschaft für Mathematik und Datenverarbeitung, Bonn) - formt die Daten wiederum in ein Vektor-Format um, so daß nachstehende Weiterverarbeitung wie im Fall von Schwarzweißvorlagen angewendet werden kann.

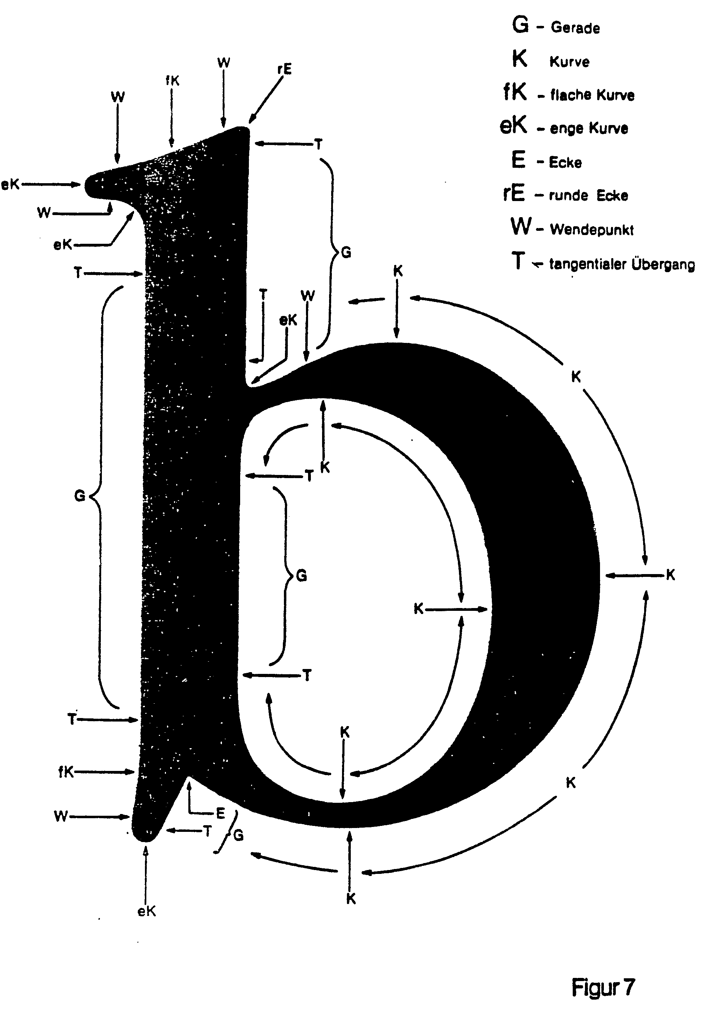

Ein wesentliches Merkmal des erfindungsgemäßen Verfahrens besteht darin, dieses Vektor-Format einem besonderen Gestalterkennungsprogramm zu unterwerfen, das Teile der Kontur als zum Beispiel Gerade, Ecke oder Kurve kennzeichnet, vgl. diesbezüglich Figur 7.

Jedes dieser Elemente wird dann dem als "Spline-Fit" - vgl. z. B. Helmut Späth: Spline-Algorithmen zur Konstruktion glatter Kurven und Flächen, R. Oldenburg-Verlag, München/Wien (1973) - bekannten mathematischen Verfahren ebenfalls mikroprogrammgesteuert unterworfen.

Mit Hilfe der so gewonnenen geschlossenen mathematischen Beschreibung der Umrißlinie werden dann so viele Koordinatenpaare von Umrißpunkten berechnet wie zur ausreichenden Beschreibung der Umrißlinie im IKARUS-Format erforderlich sind.

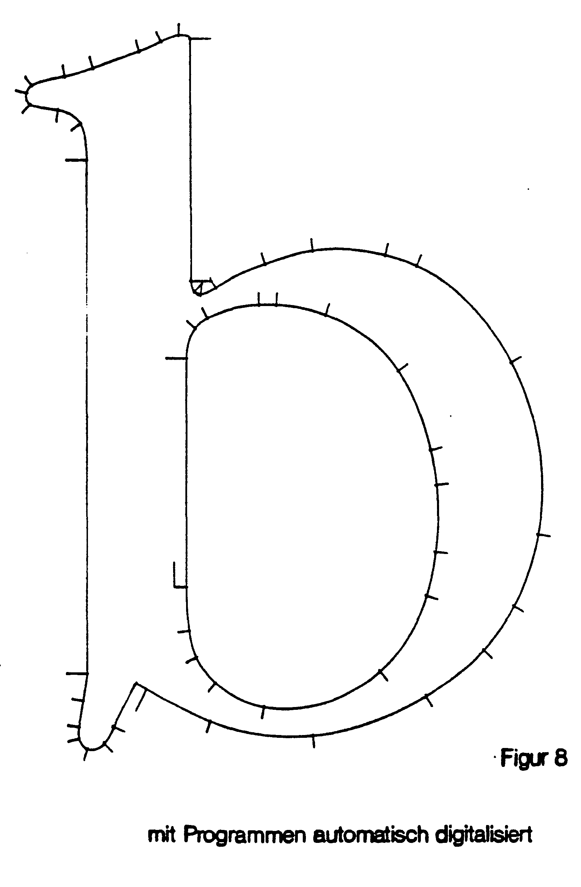

Im besprochenen Beispiel erhält man so die in Tabelle 3 zusammengestellten in hundertstel mm angegebenen Koordinatenwerte der Umrißpunkte der zu digitalisierenden Vorlage Figur 1, aus denen sich die Umrißlinie der Figur 8 ergibt. Dadurch sind die ursprünglich gewonnenen Scan-Daten, die wie an Figur 5 ersichtlich, nur ein recht unsauberes Abbild der Vorlage ergeben, ohne weiteren menschlichen Arbeitsaufwand in korrigierte, der Vorlage genau entsprechende Daten umgewandelt. Die Erfindung ermöglicht es daher, die arbeitsaufwendige Handdigitalisierung bei voller Wahrung derer Vorteile durch eine automatische zu ersetzen und darüber hinaus auch die Vorteile des IKARUS-Formates wahrzunehmen.

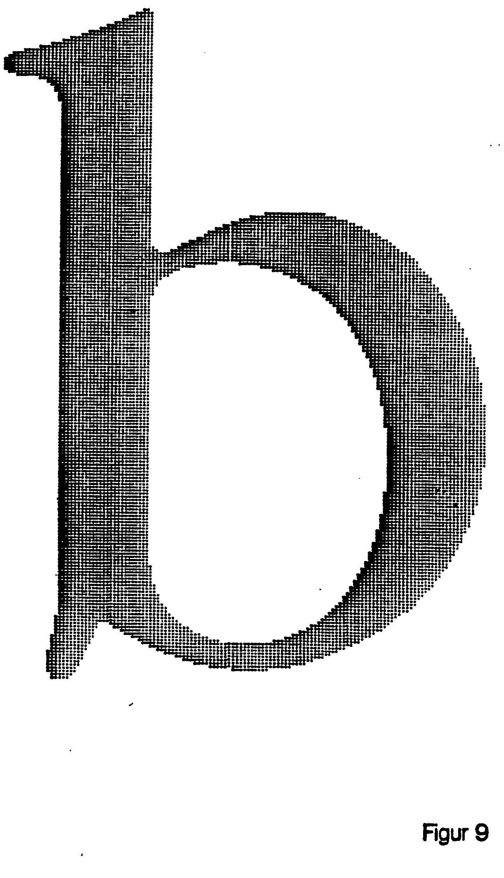

Die digitale Speicherung der Umrißlinie entsprechend z. B. Tabelle 3 kann für viele Zwecke, z. B. für die maschinelle Steuerung von Zeichen-, Schablonenschneide- oder Brennschneidemaschinen direkt und unmittelbar verwendet werden. Wenn es jedoch auf besonders hohe Arbeitsgeschwindigkeit ankommt, besonders beim Drucken von Schriften, kann es zweckmäßig oder auch notwendig sein, daraus zunächst in an sich bekannter Weise von Mikroprozessoren das komplette der Vorlage entsprechende Punktraster entsprechend Figur 9 errechnen zu lassen (soft-scanning) und als Bitmap oder Lauflängencode für die Steuerung der Druckmaschine einzusetzen. Da Bitmap und Lauflängencode für die Zwecke der vorliegenden Erfindung völlig gleichwertig und austauschbar sind, ist nachstehend für beide Begriffe stets das Wort Lauflängencode verwendet.

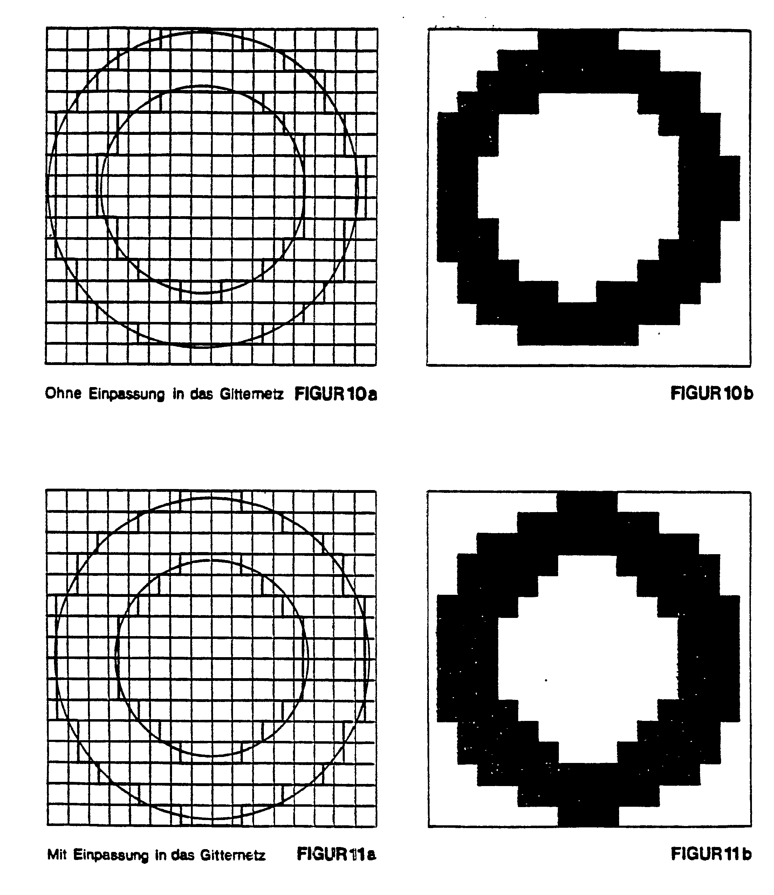

Eine besonderes Merkmal der Erfindung, nachstehend Gittereinpassung genannt, durch welche die Wiedergabequalität bei der Umsetzung des Umrisses in ein Punktraster verbessert wird, ist nachstehend an Hand der Figuren 10 und 11 einfachheitshalber am Beispiel des Buchstabens o erläutert.

Dazu wird der umzusetzenden Kontur vor ihrer Umwandlung in ein Punktraster ein wählbares Gitternetz unterlegt, wie in Figur 10a gezeigt. Zwecks Verdeutlichung der Erfindung ist hier ein übertrieben grobes Gitternetz gewählt. Die Schnittpunkte dieses willkürlich über die Kontur gelegten Gitternetzes mit der Kontur würden, als Scan-Daten gespeichert (Figur 10b), eine Druckqualität ergeben, die zwar den besten bisher durch Scannen mit einem Scanner erreichbaren Lauflängencodes entspricht, die aber immer noch verbesserungsfähig wäre.

Gemäß der hier besprochenen Ausführungsform der Erfindung wird die Kontur vor der Berechnung des Lauflängencodes so modifiziert, daß sie sowohl seitlich wie auch in Höhenrichtung so verschoben und gleichzeitig so gedehnt oder gequetscht wird, daß die Extremwerte $x_{max}$, $x_{min}$, $y_{max}$, $y_{min}$ genau in die Mitte zwischen zwei Scan-Linien zu liegen kommen, wie in Figur 11a gezeigt. Man sieht aus Figur 11b, daß dann die als Scan-Daten zu speichernden Schnittpunkte der Umrißlinie mit dem Gitternetz eine deutlich verbesserte Wiedergabe der Vorlage ergeben und auch daß sowohl die Verschiebung der Kontur in Seiten- und Höhenrichtung wie auch ihre Dehnung oder Quetschung in keinem Fall mehr als höchstens eine halbe Scanlinienbreite zu betragen braucht.

Eine bevorzugte Ausführungsform des erfindungsgemäßen Verfahrens ist nachstehend an Hand eines Ausführungsbeispiels näher beschrieben.

**Ausführungsbeispiel**

Stufe 1: Datenaufnahme durch eine Diodenzeilenkamera. Diese kann im Prinzip nach bekannten Verfahren durchgeführt werden.

Es werden zum Beispiel von einer Fläche von 200 mm x 300 mm 2000 x 3000 Bildpunkte erfaßt, so daß ein Bildpunkt einer Bildfläche von 0,1 mm x 0,1 mm entspricht. Die Anzahl der Bildpunkte und deren Abmessungen sind relativ frei wählbar. Die Zeilenkamera wird während des Abtastens der Vorlage bewegt und unterwegs 3000 mal ausgelesen. Jedesmal liefern die 2000 Dioden der Diodenzeile in der Kamera entweder weiß oder schwarz als Helligkeitsinformation für die von ihnen erfaßten 2000 Flächenelemente der Vorlage.

Stufe 2: Die erhaltenen Scan-Daten, vgl. z. B. Figur 5, werden von einem Mikroprozessor in einen Halbleiterspeicher gebracht.

In den nun folgenden Stufen werden Mikroprogramme in einem weiteren Rechenwerk zur Anwendung auf die Daten gebracht. Jedesmal werden die Daten aus dem Halbleiterspeicher nacheinander ausgelesen, verarbeitet und in transformierter Form wieder in den Halbleiterspeicher zurückgeschrieben.

Stufe 3: Erzeugung des Vektor-Formates. Es werden unter den 2000 x 3000 Bildpunkten solche Punkte gesucht, die Randpunkte sind, die sich also auf einer Umrißlinie befinden. Die benachbarten Konturpunkte werden mit einem Polygonzug untereinander verbunden und im Vektorformat gespeichert, vgl. z. B. Figur 6.

Stufe 4: Gestalterkennung

Nun wird das Vektor-Format erfindungsgemäß dazu verwendet, um ganze Vektorzüge als Gestaltelemente zu klassifizieren. Es gibt folgende Elemente: Gerade, flache Kurve, Kurve, enge Kurve, runde Ecke, Ecke, Tangentenpunkt und Wendepunkt, siehe z. B. Figur 7. Zum Teil sind die Übergänge von einem zum anderen Element fließend. Das Mikroprogramm geht iterativ vor und versucht, nach unterschiedlichen Kriterien eine Einteilung in die Elemente zu finden. Nach mehreren Versuchen wird die Einteilung genommen, die am häufigsten ausgewählt worden ist.

Stufe 5: Spline-Fit

Jedes Element zusammen mit seinen beiden Nachbarteilen wird nun dem Spline-Fit unterworfen. Es erfolgt dadurch eine Glättungsrechnung für den Verlauf des gescannten Konturteiles in der Weise, daß an den Übergangspunkten von einem Kurventeil zum nächsten nicht nur die x- und y-Koordinaten übereinstimmen, sondern auch ihre Steigungen und Krümmungen. Darüber hinaus erhält man eine geschlossene mathematische Darstellung des Verlaufes solcher Elemente, die es ermöglicht, zum Beispiel für jeden beliebigen Wert der x-Koordinate einen genau passenden Wert für die y-Koordinate zu finden und damit eine beliebig feinstufige Digitalisierung der Umrißlinie vom Mikroprozessor erstellen zu lassen.

Stufe 6: Herstellung des IKARUS-Formates

Die Spline-Darstellungen der Kurventeile werden dazu verwendet, besonders charakteristische Punkte des Umrisses genauer zu berechnen, als sie vom Scanner erfaßt werden können. So tragen etwa 25 Umrißpunkte der Bitmap links und rechts von einem Kurvenpunkt zu seiner Bestimmung bei. Auch können aus den Spline-Darstellungen die wichtigen Eckpunkte als Schnittpunkte von Spline-Elementen z. B. zweier Geraden oder einer Geraden mit einer Kurve oder zweier Kurven miteinander genauer ermittelt werden. Es ergibt sich, daß die IKARUS-Punkte im Mittel um den Faktor 5 besser definiert werden können als durch die Bitmap-Auflösung, die im vorliegenden Beispiel (vergleiche Stufe 1) nur einer Genauigkeit von ± 0,1 mm entspricht.

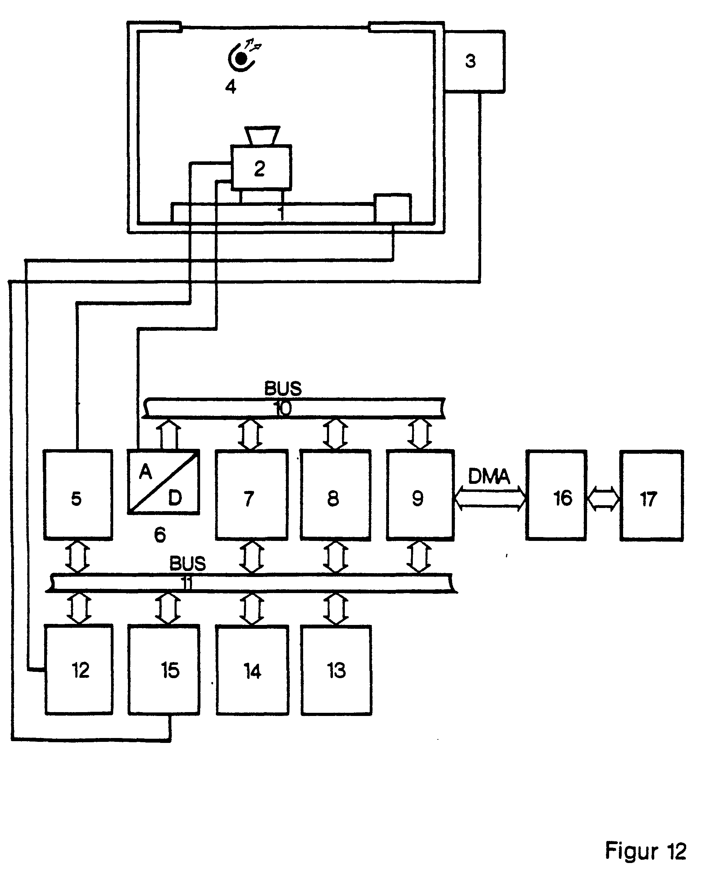

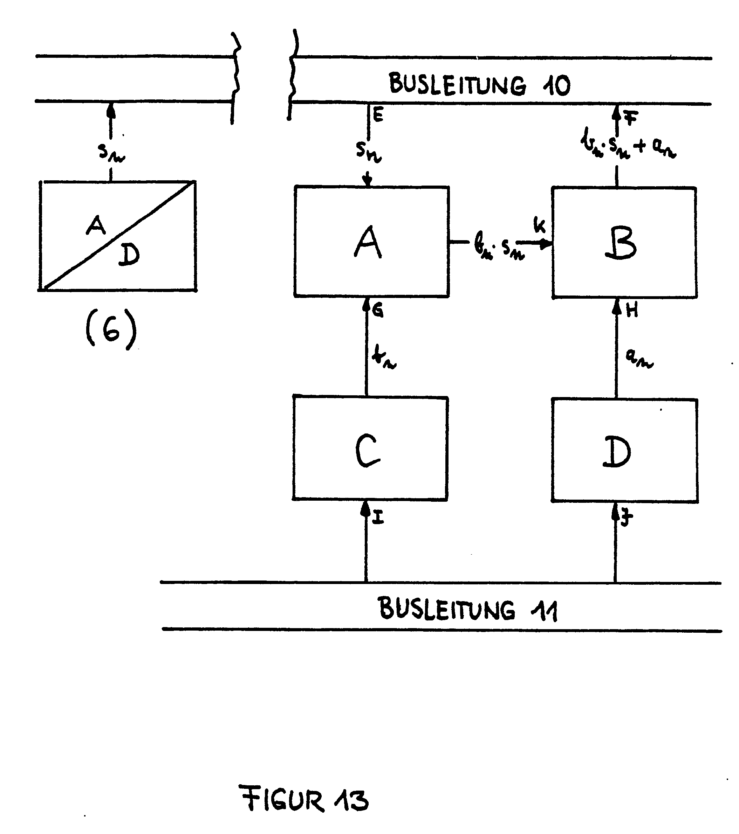

Eine für die Durchführung der ersten erfindungsgemäßen Verfahrensstufe bevorzugte Vorrichtung, die einige Nachteile bekannter Vorrichtungen vermeidet, ist nachstehend anhand der Figuren 12 und 13 schematisch und beispielsweise näher erläutert. Zu diesen Nachteilen bekannter Vorrichtungen gehört vor allem die Tatsache, daß sowohl die Beleuchtung der Vorlage nicht gleichmäßig die Länge der belichteten Zeile entlang erfolgt sowie auch, daß zusätzliche Ungleichmäßigkeiten in der Lichtempfindlichkeit der einzelnen Dioden des Kamerasensors auftreten. Beides verursacht bisher nicht unbeträchtliche Schwankungen in der Beurteilung verschiedener Bildpunkte, die in der Vorlage den gleichen Grauwert haben, als entweder schwarz oder weiß oder einer bestimmten Grauwertklasse angehörig.

In der Figur 12 ist 1 ein mit einem Antrieb versehener Präzisionsschlitten, auf dem die Halbleiterzeilenkamera 2 montiert ist. 3 ist das Bedienungsfeld mit einer Reihe von (nicht dargestellten) Signallampen und Tasten, die die Betriebsbereitschaft des Systems anzeigen und die Einstellung der Parameter der aufzunehmenden Vorlage (z. B. Größe, Helligkeit) erlaubt. Eine Lichtquelle 4, vorzugsweise ein Halogen strahler, leuchtet die aufzunehmende Vorlage zeilenweise aus. Nach Start des Scan-Vorganges wird die Kamera 2 durch den Schlitten 1 kontinuierlich verfahren und erhält dabei über den Timing-Controller 5 entsprechende Steuersignale, welche die Belichtungszeiten festlegen sowie wann eine neue Zeile aufgenommen wird.

Die zunächst als analoges Video-Signal erhaltenen Scan-Daten durchlaufen einen Analog/Digital-Wandler 6, in dem sie z. B. 6 oder 8 Bit tief digitalisiert werden. Das digitalisierte Video-Signal wird vom Korrekturrechner 7 mit einem Polynom ersten Gerades multipliziert, dessen Koeffizienten für jede Zelle des Kamerasensors einen anderen, separat zu bestimmenden Wert haben, der sowohl die Lichtempfindlichkeit dieser Zelle als auch die ihrem geometrischen Ort entsprechende Beleuchtungsstärke berücksichtigt.

Durch diese Multiplikation

$$S_n' = a_n + b_n \cdot S_n$$
$S_n$ = von der Kamera geliefertes Video-Signal der Zellen
$S_n'$ = korrigiertes Video-Signal
$a_n, b_n$ = Koeffizienten für Zelle n

werden die durch die unterschiedliche Beleuchtungsstärke und Lichtempfindlichkeit der verschiedenen Zellen verursachten Fehler praktisch vollständig korrigiert.

Die so korrigierten Scan-Daten werden anhand einer Grauwert-Tabelle 8 mit einem vorgegebenen Schwellenwert verglichen und je nachdem, ob sie größer oder kleiner als dieser Schwellenwert sind, zum binären Signal 1 oder 0 kodiert. Aus dem erhaltenen Binärsignal wird in bekannter Weise redundante Information entfernt, indem Bereiche mit konstantem Signal weggelassen und nur Stellen, an denen ein Wechsel zwischen 0 und 1 stattfindet, als Lauflängen- oder Übergangskode im bidirektionalen 2-Port-Speicher 9 abgespeichert werden.

Dieser Pufferspeicher dient als Zwischenspeicher für Daten, die per DMA (Direct Memory Access) 16 in den Hostrechner 17 übertragen werden, sobald über den anderen Port aus der der schnellen Datenübertragung von einem Modul in das benachbarte dienenden Busleitung 10 eine bestimmte Anzahl von Daten aufgenommen worden ist (i.A. 2084 Bytes). Der Hostrechner steuert alle weiteren Verfahrensstufen 2 bis 6 des Ausführungsbeispiels.

Die Busleitung 11 dient dagegen zur Kommunikation aller Module untereinander und zum relativ langsamen Transfer von Daten.

12 ist die Motorsteuerung für die Bewegung des Schlittens, 13 ist der zentrale Steuerrechner, der alle im Aufnahmesystem ablaufenden Prozesse überwacht und eventuelle Fehler im System durch Selbsttest lokalisiert und im Bedienfeld 3 anzeigt. Die verschiedenen Programme für den Steuerrechner 13 zur Steuerung und Fehlerdiagnose befinden sich auf der Speicherkarte 14, die die entsprechenden RAM's (Random Acces Memory) und EPROM's (Erasable Programmable Read Only Memory) enthält. Es handelt sich um folgende Programme zur Steuerung von:

a) Kamera 2
b) Grauwerttabelle und Daten Kompression 8
c) Pufferspeicher 9
d) Motorsteuerung 12
e) PIO-Karte für Ein/Ausgabe 15
f) DMA-Anschaltung 16

Da die meisten dieser Teilprogramme und entsprechende Schaltungen im Handel erhältlich sind, können obige Funktionen aus solchen käuflichen Teilen zusammengesetzt werden.

Für die Pixel-Shading-Korrektur 7 (weiter oben auch Korrekturrechenwerk genannt) wird eine spezielle, schnelle Schaltung verwendet, siehe Figur 13. In dieser bedeutet A/D den Analogdigital-Wandler 6. Die digitalen Meßwerte $S_n$ aus den n Dioden werden über die Leitung E in den Multiplikationsprozessor A eingegeben. Parallel dazu werden aus dem Zwischenspeicher C über die Leitung G die zugehörigen Korrekturparameter $b_n$ geladen. Der Prozessor A führt eine Multiplikation der $S_n$ mit den $b_n$ aus und gibt über die Leitung K das Produkt an den Additionsprozessor B weiter. Gleichzeitig erhält dieser aus dem Zwischenspeicher D über die Leitung H entsprechende Korrekturparameter $a_n$. Der Additionsprozessor führt die Addition von Produkt und $a_n$ aus und gibt das Resultat über die Leitung F an die Busleitung 10 ab.

Bei Start der Elektronik werden C und D über die Busleitung 11 und die Leitungen I und 7 vom Steuerrechner 13 einmalig mit Daten aus dem Speicher 14 geladen.

15 ist eine parallele Ein/Ausgangskarte, welche die Tasten und Lampen des Bedienfeldes 3 kontrolliert.

16 ist die DMA-Anschaltung, die zur schnellen Übertragung der Scan-Daten in den Speicher des Hostrechners 17 während der Aufnahme dient, der auch die weiteren Operationen der Verfahrensstufen 2 bis 6 des Ausführungsbeispiels erledigt.

**Tabelle 1**

IKARUS-Format für den Buchstaben "b" (Figur 1) durch Handdigitalisierung (bisheriges Verfahren), vergleiche auch Figur 2

| Pkt. Nr. | Pkt. Art | Koordinaten in 1/100 mm | | Pkt. Nr. | Pkt. Art | Koordinaten in 1/100 mm | |
|---|---|---|---|---|---|---|---|
| | | x | y | | | x | y |
| 1 | 12 | 5410 | 871 | 33 | 14 | 7167 | 10195 |
| 2 | 15 | 4760 | -389 | 34 | 14 | 8147 | 10664 |
| 3 | 14 | 4611 | -612 | 35 | 14 | 9131 | 11069 |
| 4 | 14 | 4381 | -708 | 36 | 14 | 10225 | 11247 |
| 5 | 14 | 4137 | -632 | 37 | 14 | 12539 | 10689 |
| 6 | 14 | 4016 | -348 | 38 | 14 | 14652 | 8604 |
| 7 | 14 | 4072 | 121 | 39 | 14 | 15423 | 5757 |
| 8 | 14 | 4199 | 798 | 40 | 14 | 14553 | 2479 |
| 9 | 14 | 4260 | 1592 | 41 | 14 | 12015 | 307 |
| 10 | 15 | 4263 | 2199 | 42 | 14 | 9401 | -379 |
| 11 | 15 | 4263 | 13236 | 43 | 14 | 7472 | -89 |
| 12 | 14 | 4248 | 13763 | 44 | 14 | 5795 | 650 |
| 13 | 14 | 4061 | 14284 | 45 | 13 | 5410 | 871 |
| 14 | 14 | 3672 | 14525 | 46 | 12 | 6668 | 3180 |
| 15 | 14 | 3172 | 14600 | 47 | 15 | 6668 | 8568 |
| 16 | 14 | 2871 | 14706 | 48 | 14 | 6719 | 9022 |
| 17 | 14 | 2815 | 14902 | 49 | 14 | 6887 | 9379 |
| 18 | 14 | 2888 | 15104 | 50 | 14 | 7276 | 9667 |
| 19 | 14 | 3115 | 15204 | 51 | 14 | 7896 | 9842 |
| 20 | 14 | 3517 | 15301 | 52 | 14 | 8630 | 9923 |
| 21 | 14 | 4216 | 15499 | 53 | 14 | 9922 | 9705 |
| 22 | 14 | 5020 | 15760 | 54 | 14 | 11291 | 8934 |
| 23 | 14 | 5857 | 16088 | 55 | 14 | 12490 | 7011 |
| 24 | 14 | 6338 | 16291 | 56 | 14 | 12820 | 4922 |
| 25 | 14 | 6563 | 16345 | 57 | 14 | 12509 | 2977 |
| 26 | 14 | 6735 | 16279 | 58 | 14 | 11712 | 1469 |
| 27 | 14 | 6790 | 16008 | 59 | 14 | 10638 | 625 |
| 28 | 15 | 6785 | 15690 | 60 | 14 | 9161 | 259 |
| 29 | 15 | 6785 | 10723 | 61 | 14 | 7982 | 505 |
| 30 | 14 | 6783 | 10475 | 62 | 14 | 7015 | 1311 |
| 31 | 14 | 6795 | 10275 | 63 | 14 | 6713 | 2296 |
| 32 | 14 | 6964 | 10155 | 64 | 15 | 6668 | 3180 |

12 = Anfangspunkt
13 = Eckpunkt
14 = Kurvenpunkt
15 = Tangentenpunkt

**Tabelle 2**

Lauflängencode entsprechend Figur 4

| | |
|---|---|
| 1 | 10,16,32000, |
| 2 | 8,18,32000, |
| 3 | 7,19,32000, |
| 4 | 7,11,15,19,32000, |
| 5 | 6,10,16,20,32000, |
| 6 | 6,9,17,20,32000, |
| 7 | 5,8,18,21,32000, |
| 8 | 5,8,18,21,32000, |
| 9 | 5,8,18,21,32000, |
| 10 | 6,9,17,20,32000, |
| 11 | 6,10,16,20,32000, |
| 12 | 7,11,15,19,32000, |
| 13 | 7,19,32000, |

14     8,18,32000,
15     10,16,32000,

6 Leerbildlinien als Vorbreite
10 Leerbildlinien als Nachbreite
31 Linien Gesamtbreite (Dicke)

**Tabelle 3**

IKARUS-Format für den Buchstaben "b" (Figur 1) durch automatische Digitalisierung (erfindungsgemäß), vergleiche auch Figur 8

| Pkt. Nr. | Pkt. Art | Koordinaten in 1/100 mm | | Pkt. Nr. | Pkt. Art | Koordinaten in 1/100 mm | |
|---|---|---|---|---|---|---|---|
| | | x | y | | | x | y |
| 1 | 12 | 1930 | 3790 | 28 | 14 | 6510 | 10432 |
| 2 | 14 | 1570 | 3090 | 29 | 14 | 8087 | 8910 |
| 3 | 14 | 1420 | 2825 | 30 | 14 | 8535 | 6170 |
| 4 | 14 | 1150 | 2736 | 31 | 14 | 8123 | 5020 |
| 5 | 14 | 1010 | 2900 | 32 | 14 | 7610 | 4320 |
| 6 | 14 | 1011 | 3090 | 33 | 14 | 6660 | 3588 |
| 7 | 14 | 1086 | 3510 | 34 | 14 | 4820 | 2962 |
| 8 | 15 | 1150 | 3940 | 35 | 14 | 3160 | 3188 |
| 9 | 15 | 1160 | 12110 | 36 | 14 | 1930 | 3790 |
| 10 | 14 | 1060 | 12690 | 37 | 12 | 2770 | 5320 |
| 11 | 14 | 700 | 12900 | 38 | 15 | 2770 | 8960 |
| 12 | 14 | 260 | 12980 | 39 | 14 | 2914 | 9440 |
| 13 | 14 | 201 | 13170 | 40 | 14 | 3120 | 9599 |
| 14 | 14 | 288 | 13290 | 41 | 14 | 3960 | 9809 |
| 15 | 14 | 810 | 13437 | 42 | 14 | 4240 | 9811 |
| 16 | 14 | 1270 | 13572 | 43 | 14 | 5020 | 9660 |
| 17 | 14 | 2000 | 13830 | 44 | 14 | 6210 | 8770 |
| 18 | 14 | 2360 | 13981 | 45 | 14 | 6750 | 7510 |
| 19 | 14 | 2640 | 14089 | 46 | 14 | 6849 | 6950 |
| 20 | 15 | 2830 | 14030 | 47 | 14 | 6826 | 5890 |
| 21 | 15 | 2850 | 10180 | 48 | 14 | 6679 | 5190 |
| 22 | 14 | 2903 | 10020 | 49 | 14 | 5900 | 3976 |
| 23 | 14 | 3010 | 9974 | 50 | 14 | 4040 | 3417 |
| 24 | 14 | 3260 | 10075 | 51 | 14 | 3250 | 3796 |
| 25 | 14 | 4060 | 10450 | 52 | 14 | 2930 | 4200 |
| 26 | 14 | 4820 | 10669 | 53 | 14 | 2810 | 4620 |
| 27 | 14 | 5990 | 10598 | 54 | 14 | 2770 | 5320 |

12 = Anfangspunkt
13 = Eckpunkt
14 = Kurvenpunkt
15 = Tangentenpunkt

**Patentansprüche**

1. Verfahren zur Qualitätsverbesserung von Scan-Daten beim automatischen Digitalisieren des Umrisses von Strichgraphiken, Buchstaben u. dgl. unter Verwendung eines Scanners für die erstmalige Gewinnung und Speicherung der Bildinformation aus der Vorlage, Umwandlung derselben in Mikroprozessoren und -speichern in Vektordaten, Unterwerfung des gewonnenen Bildes einem in weiteren Mikroprozessoren gespeicherten Gestalterkennungsprogramm unter Zerlegung in Bildelemente wie Gerade, Kurve, Ecke und Zusammensetzung zusammengehöriger Teilkurven nach dem bekannten Spline-Fit zu einer Gesamtkurve so daß an den Stoßstellen Stetigkeit sowohl des Kurvenverlaufes wie auch der Steigung und Krümmung bestehen, sowie Berechnung der Koordinatenpaare der für die gewünschte Feinstufigkeit erforderlichen Kurvenpunkte nach den Regeln des IKARUS-Konzeptes aus der so erhaltenen mathematischen Darstellung des Umrißverlaufes, insbesondere bevorzugter Punkte wie Schnittpunkte von Geraden und/oder Kurven miteinander, Wendepunkte und Extremwerte in x- und y-Richtung, gekennzeichnet durch Qualitätsverbesserung mittels Rückübersetzung des erhaltenen IKARUS-Formates in einen Lauflängencode, Unterlegung eines wählbaren Gitternetzes unter die erhaltene Kontur, Berechnung der Schnittpunkte derselben mit dem Gitternetz und Verschiebung sowie gegebenenfalls geringförmige Verformung der Kontur so, daß die Extremwerte der x- und y-Koordinaten zwischen je zwei Scan-Linien zu liegen kommen.

2. Verfahren nach Anspruch 1, dadurch gekennzeichnet, daß zu den Stützpunkten für die Spline-Funktion bevorzugte Punkte wie Schnittpunkte von Geraden und/oder Kurven miteinander, Extremwerte der Kurvenverläufe in x- und y- Richtung sowie, soweit vorhanden, Wendepunkte gehören.

## Claims

1. Method for improving the quality of scan data when automatically digitizing the contours of line graphics, characters and the like using a scanner for acquisition and storage of the image information from the original, conversion of the same in microprocessors and micromemories into vector data, subjection of the image obtained to a shape recognition programme, stored in further microprocessors, involving breaking down into image elements such as straight line, curve, corner and composing of associated curve sections on the basis of the known spline fit into a complete curve, so that at the joining points there is continuity both of the curve profile and of the slope and curvature, as well as calculation of the pairs of co-ordinates of the curve points necessary for the required fine graduation on the basis of the rules of the IKARUS concept from the mathematical representation of the contour profile thus obtained, in particular of preferred points such as intersections of straight lines and/or curves with one another, points of inflection and extreme values in x and y directions, characterized by quality improvement by means of translation of the IKARUS format obtained back into a run length code, laying of a selectable grid underneath the contour obtained, calculation of the intersections of the same with the grid and displacement and, if appropriate, slight deformation of the contour such that the extreme values of the x and y co-ordinates each come to lie between two scan lines.

2. Method according to Claim 1, characterised in that the points used for the spline function include preferred points such as intersections of straight lines and/or curves with one another, extreme values of the curve profiles in x and y directions as well as points of inflection, if any.

## Revendications

1. Procédé en vue de l'amélioration qualitative de données codées lors de la numérisation automatique du tracé de représentations graphiques à traits, de lettres et analogues, ce procédé consistant à utiliser un scanner pour la première obtention et la mémorisation des donnees graphiques à partir du modèle, transformer ces données en données vectorielles dans des microprocesseurs et des micromémoires, soumettre l'image produite à un programme de reconnaissance de formes mis en mémoire dans des microprocesseurs complémentaires, en la décomposant en éléments graphiques tels que des droites, des courbes, des angles et en assemblant les portions de courbes appartenant à un même ensemble, selon le procédé connu "spline-fit", en une courbe complète, de sorte qu'aux endroits de jonction on obtienne une continuité aussi bien dans le trace curviligne que dans l'élévation et l'incurvation, de même que calculer les paires de coordonnées des points de courbes nécessaires à la précision désirée de l'échelonnement, selon les règles du "concept d'IKARUS", à partir de la représentation mathématique du tracé ainsi obtenue, en particulier, les paires de coordonnées de points préférés, tels que les points d'intersection des droites et/ou des courbes les unes avec les autres, les points d'inflexion ainsi que les valeurs extrêmes en direction x et en direction y, ce procédé étant caractérisé en ce que l'on améliore la qualité en retraduisant le "format-IKARUS" obtenu en un code de durée de course, en ce que l'on applique un réseau à grille sélectionnable par dessous le trace obtenu, en ce que l'on calcule les points d'intersection de ce tracé avec le reseau à grille, et en ce que l'on déplace, de même qu'éventuellement l'on modifie légèrement le tracé, de telle sorte que les valeurs extrêmes des coordonnées x et y viennent se placer chaque fois entre deux lignes codées.

2. Procédé selon la revendication 1, caractérisé en ce que, parmi les points de jonction préférés pour la fonction "spline", il y a les points d'intersection des droites et/ou des courbes les unes avec les autres, les valeurs extrêmes des traces curvilignes dans les directions x et y, ainsi que, pour autant qu'ils existent, les points d'inflexion.

EP 0 131 676 B1

Figur 2

mit der Hand digitalisiert

## Prinzip eines Scanners

aufgespannte Vorlage

Lichtreflektion an der Vorlage

Drehachse

Abtastkopf

Bewegungsrichtung des Abtastkopfes

Figur 3

Figur 4

Figur 5

Figur 6

Figur 7

·Figur 8

mit Programmen automatisch digitalisiert

Figur 9

Ohne Einpassung in das Gitternetz **FIGUR 10a**

**FIGUR 10b**

Mit Einpassung in das Gitternetz **FIGUR 11a**

**FIGUR 11b**

Figur 12

BUSLEITUNG 10

$s_n$

$s_n$

$b_n \cdot s_n + a_n$

E

F

A/D

A

$b_n \cdot s_n$

k

B

(6)

G

H

$t_n$

$a_n$

C

D

I

J

BUSLEITUNG 11

FIGUR 13